# EUROPEAN PATENT APPLICATION

(11) **EP 3 244 518 A1**
(43) Date of publication of application: **15.11.2017**
(21) Application number: 17168548.0
(22) Date of filing: 27.04.2017
(51) Int. Cl.: H02M 1/00, H02M 3/158

(54) **CURRENT LIMITED POWER CONVERTER CIRCUITS AND METHODS**

(30) Priority: 13.05.2016 US 201615154497
(71) Applicant: Altera Corporation, San Jose, California CA 95134-1941 (US)
(72) Inventor: Travaglini, Dominick, San Jose, CA California 95134-1941 (US); Demski, Jeffrey, San Jose, CA California 95134-1941 (US); Mathes, Thomas, San Jose, CA California 95134-1941 (US); Tarlton, Sean, San Jose, CA California 95134-1941 (US); Zbib, Joseph, San Jose, CA California 95134-1941 (US)
(74) Representative: Pistorius, Richard

(57) **Abstract**

A power converter circuit regulates an output voltage of a power train circuit and controls the current in the power train circuit. A current sensor circuit measures a current in the power train circuit. A hysteretic comparison circuit compares the current in the power train circuit to positive and negative current limits. The hysteretic comparison circuit causes a positive current in the power train circuit to decrease in a positive current limit mode in response to the positive current in the power train circuit reaching the positive current limit. The hysteretic comparison circuit causes a negative current in the power train circuit to decrease in a negative current limit mode in response to the negative current in the power train circuit reaching the negative current limit. The hysteretic comparison circuit prevents a pulse width modulation controller from controlling the power train circuit during the positive and negative current limit modes.

## Description

### FIELD OF THE DISCLOSURE

The present disclosure relates to electronic circuits, and more particularly, to power converter circuits and methods with current limiting.

### BACKGROUND

A power converter is a circuit that converts an input voltage into an output voltage. A power converter may generate a regulated output voltage at an output node that is coupled to a load. A power converter provides output current to the load at the regulated output voltage, and the load draws current from the power converter. A power converter may have a controller that manages the operation of the power converter by controlling the conduction periods of switching transistors therein. Typically, the controller measures the output voltage and based on the output voltage modifies duty cycles of the switching transistors. The duty cycle of each of the switching transistors is a ratio represented by a conduction period of that transistor to a switching period of that transistor.

### BRIEF SUMMARY

According to some embodiments, a power converter circuit includes a current sensor circuit and a hysteretic comparison circuit. The current sensor circuit generates an indication of a current in a power train circuit. The power converter circuit regulates an output voltage at an output node of the power train circuit. The power converter circuit also controls the current in the power train circuit. The hysteretic comparison circuit compares the indication of the current in the power train circuit to a current limit. The power converter circuit decreases a magnitude of the current in the power train circuit in response to an indication generated by the hysteretic comparison circuit that the current in the power train circuit has reached the current limit.

According to some embodiments, the hysteretic comparison circuit compares the current in the power train circuit to a positive current limit and to a negative current limit. The hysteretic comparison circuit causes a positive current in the power train circuit to decrease in a positive current limit mode in response to the positive current in the power train circuit reaching the positive current limit. The hysteretic comparison circuit causes a negative current in the power train circuit to decrease in a negative current limit mode in response to the negative current in the power train circuit reaching the negative current limit.

Various objects, features, and advantages of the present invention will become apparent upon consideration of the following detailed description and the accompanying drawings.

### BRIEF DESCRIPTION OF THE DRAWINGS

Figure 1 illustrates a power converter circuit having a current limit circuit that monitors positive and negative output currents, according to an embodiment.
Figure 2A illustrates an example of a current sensor circuit that includes an integrated current replicator circuit, according to an embodiment.
Figures 2B-2C illustrate an example of a current sensor circuit having two resistors, two transistors, and two operational amplifiers, according to another embodiment.
Figure 3 illustrates an example of the hysteretic comparison circuit of Figure 1, according to an embodiment.
Figure 4A is a timing diagram that illustrates an example of the current through the power train circuit as the power converter circuit of Figure 1 enters and exits a positive current limit mode of operation, according to an embodiment.
Figure 4B is a timing diagram that illustrates an example of the current through the power train circuit as the power converter circuit of Figure 1 enters and exits a negative current limit mode of operation, according to an embodiment.
Figure 5 is a flow chart showing operations that may be performed to determine when the power converter circuit of Figure 1 enters and exits the positive current limit mode, according to an embodiment.
Figure 6 is a flow chart showing operations that may be performed to determine when the power converter circuit of Figure 1 enters and exits the negative current limit mode, according to an embodiment.

### DETAILED DESCRIPTION

As discussed above, a power converter provides output current to a load at a regulated output voltage using switches, such as switching transistors. A power converter may also have an output filter that includes an inductor and a capacitor. In response to the current drawn by the load from a power converter increasing, the power converter increases the output current provided to the load to maintain the output voltage at a substantially constant voltage. If the current drawn by the load increases substantially in a short time period, the power converter may cause the output current to increase to the maximum output current of the power converter. Power converters may have maximum allowed positive output currents and atypically maximum allowed negative output currents. The maximum positive and negative output currents may be selected, for example, to prevent the inductor from saturating.

A power converter typically has a current limit circuit that turns off the main switching transistor if the peak or the average positive output current in the power train of the power converter reaches the maximum positive output current. However, previously known current limit circuits do not always prevent the output current of a power converter from exceeding its maximum positive output current for a few reasons. First, previously known current limit circuits are often slow to respond to the output current of the power converter reaching the maximum positive output current. The delay in responding to the output current reaching the maximum positive output current may allow the output current to substantially exceed the maximum positive output current. Also, previously known current limit circuits do not maintain the main switching transistor off for long enough to prevent the output current from reaching the maximum positive output current again very soon after the main switching transistor is turned back on. If the load current remains high, the output current of the power converter may repeatedly reach and exceed the maximum positive output current. In addition, previously known current limit circuits do not measure a negative current in the power train of a power converter. A negative current in the power train of a power converter may, for example, refer to a current flowing through the inductor toward the switching transistors away from the load, instead of toward the load. A negative current in the power train flows away from an output node of the power train. A negative current in the power train of a power converter may exceed a maximum negative output current of the power converter, which can also cause the inductor to saturate. A positive current in the power train flows toward the output node of the power train and toward the load.

According to some embodiments disclosed herein, a power converter circuit has a current limit circuit that includes a current sensor circuit and a hysteretic comparison circuit. The current sensor circuit continuously monitors the output current of the power converter circuit in a power train. The current sensor circuit measures positive and negative output currents of the power converter circuit to generate an indication of the output current in a current sense signal. The current sense signal is provided to the hysteretic comparison circuit. The hysteretic comparison circuit compares the current sense signal to a positive current limit. If the output current reaches the positive current limit, the power converter maintains the main switching transistor off during a positive current limit mode, until the output current reaches a minimum positive current of the positive current limit mode. Thus, the hysteretic comparison circuit limits the magnitude of the output current when the output current is flowing toward the output node of the power train. The hysteretic comparison circuit also compares the current sense signal to a negative current limit. If the output current reaches the negative current limit, the power converter maintains the auxiliary switching transistor off during a negative current limit mode, until the output current reaches a minimum negative current of the negative current limit mode. Thus, the hysteretic comparison circuit limits the magnitude of the output current when the output current is flowing away from the output node of the power train. During the current limit modes, the conductive states of the switching transistors are controlled by the current limit circuit, and the current limit circuit prevents a controller from controlling the switching transistors using pulse width modulation.

Figure (FIG.) 1 illustrates a power converter circuit 100 according to an embodiment. Power converter circuit 100 includes power train circuit 101, driver circuit 102, gate circuit 103, controller circuit 104, current sensor circuit 105, and hysteretic comparison circuit 106. Power train circuit 101 includes a main switching transistor 111, an auxiliary switching transistor 112, an inductor 114, and an output capacitor 116. Main switching transistor 111 may be, for example, a P-channel field effect transistor (FET), and auxiliary switching transistor 112 may be, for example, an N-channel FET. Transistors 111 and 112 may be, for example, power metal oxide semiconductor field-effect transistors (i.e., power MOSFETs). Transistors 111 and 112 act as switches. Therefore, any semiconductor circuits that function as switches may be used as transistors 111-112. Power converter circuit 100 may also be referred to as a switching voltage regulator circuit or a DC/DC converter circuit. In some embodiments, switching transistors 111-112, driver circuit 102, gate circuit 103, current sensor circuit 105, and hysteretic comparison circuit 106 are all in one integrated circuit (IC), and controller circuit 104 is in a separate integrated circuit. In some embodiments, one or more of the circuits in power train circuit 101, such as inductor 114 and capacitor 116, are discrete components.

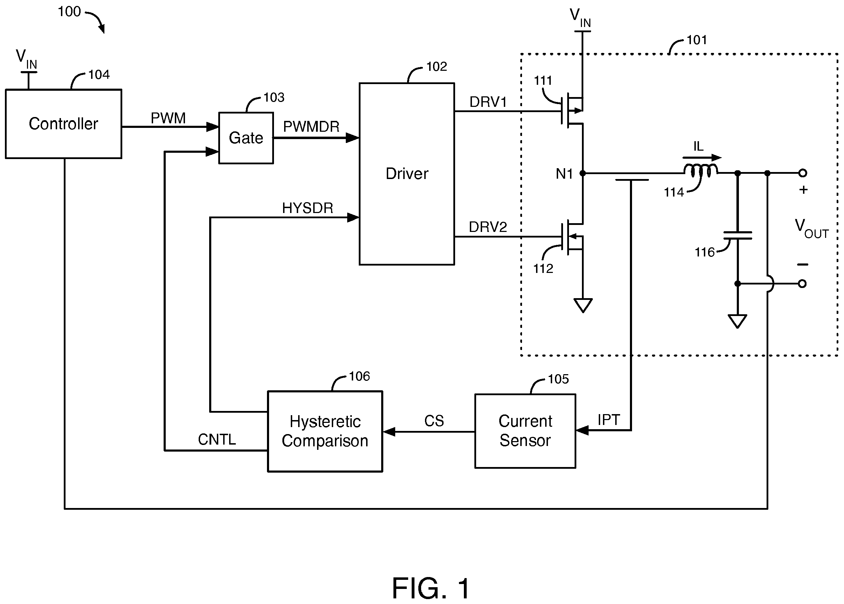

Power train circuit 101 receives an input voltage V_{IN} at an input from a source of electrical power and generates a regulated output voltage V_{OUT} at an output node based on the input voltage V_{IN}. Power converter 100 converts the input voltage V_{IN} into the output voltage V_{OUT}. Power train circuit 101 shown in FIG. 1 employs a step-down (buck) converter topology that converts an input voltage V_{IN} into an output voltage V_{OUT} that is less than the input voltage V_{IN}. Thus, V_{IN} in FIG. 1 is greater than V_{OUT}. Although power train circuit 101 is a step-down converter, embodiments of the present invention may be included in other power converter topologies, such as in a step-up (boost) power converter circuit that converts an input voltage into an output voltage that is greater than the input voltage.

The output voltage V_{OUT} of power converter circuit 100 is provided to a load that is coupled to the output node of power converter circuit 100. The load may be, for example, a microprocessor integrated circuit, a field programmable gate array integrated circuit, or any other type of circuit or system that draws current. Power converter circuit 100 provides output current to the load at V_{OUT}, and the load draws current from power converter circuit 100. Power converter circuit 100 alternately turns the switching transistors 111-112 on and off to provide output current to the load and to maintain the output voltage V_{OUT} at a substantially constant voltage. The output capacitor 116 is coupled between the output node of power converter circuit 100 and a ground node that is at a ground voltage. Output capacitor 116 filters V_{OUT} to help maintain V_{OUT} at a substantially constant DC voltage.

Driver circuit 102 generates two drive voltages DRV1 and DRV2 that are provided to the gates of transistors 111 and 112, respectively. Driver circuit 102 controls the conductive states of the switching transistors 111 and 112 by controlling the drive voltages DRV1 and DRV2, respectively. Driver circuit 102 switches transistors 111 and 112 out of phase, such that when one of transistors 111-112 is on, the other one of transistors 111-112 is off. Power converter circuit 100 prevents transistors 111 and 112 from being on at the same time. During each switching period of transistors 111-112, transistor 111 is on and transistor 112 is off for a primary portion of the switching period, and transistor 111 is off and transistor 112 is on for a complementary portion of the switching period. The on-times of switching transistors 111 and 112 may be separated by small time intervals in each switching period during which both of transistors 111-112 are off to avoid cross-conduction there between.

During the primary portion of each switching period of transistors 111-112, driver circuit 102 maintains transistor 112 off, and driver circuit 102 maintains transistor 111 on, causing the input voltage V_{IN} to be coupled to output inductor 114 through transistor 111. During the primary portion of each switching period, the current IL flowing through inductor 114 increases in response to current flowing through transistor 111 between input voltage V_{IN} and inductor 114.

During the complementary portion of each switching period of transistors 111-112, driver circuit 102 maintains transistor 111 off, and driver circuit 102 maintains transistor 112 on, causing the inductor 114 to be coupled to a ground node at the source of transistor 112 that is at the ground voltage. When auxiliary transistor 112 is on, transistor 112 provides a circuit path to maintain the continuity of the inductor current IL flowing through the inductor 114. During the complementary portion of each switching period, the current IL flowing through inductor 114 decreases in response to current flowing through transistor 112 between the ground node and inductor 114.

The controller circuit 104 generates one or more PWM signals to control the duty cycles of the switching transistors 111-112 using driver circuit 102. Controller circuit 104 may be referred to as a pulse-width modulation (PWM) controller circuit. The one or more PWM signals generated by controller circuit 104 are provided to one or more inputs of gate circuit 103. Gate circuit 103 may be, for example, a logic gate circuit, such as an AND or a NAND logic gate circuit. Hysteretic comparison circuit 106 generates a control signal CNTL that is provided to an additional input of gate circuit 103. Gate circuit 103 generates signals PWMDR at its outputs.

Power converter circuit 100 operates in at least three modes of operation that are referred to as a pulse width modulation (PWM) mode, a positive current limit mode, and a negative current limit mode. The current limit modes are described in detail below. During the pulse width modulation mode, hysteretic comparison circuit 106 causes the control signal CNTL to have a value that causes gate circuit 103 to pass the values of the PWM signals to the outputs of gate circuit 103 in signals PWMDR. For example, if gate circuit 103 is an AND gate or a NAND gate, hysteretic comparison circuit 106 drives control signal CNTL to a logic high state during pulse width modulation mode, causing gate circuit 103 to drive signals PWMDR to the same values as signals PWM.

Signals PWMDR are provided to inputs of driver circuit 102. Driver circuit 102 generates the drive voltages DRV1 and DRV2 based on the PWMDR signals during PWM mode. In response to first values in the PWMDR signals, driver circuit 102 turns on transistor 111 and turns off transistor 112. In response to second values in the PWMDR signals, driver circuit 102 turns off transistor 111 and turns on transistor 112. Controller circuit 104 causes the PWM and PWMDR signals to alternate between the first and second values during PWM mode.

Controller circuit 104 receives the input voltage V_{IN} and the output voltage V_{OUT} at inputs. Controller circuit 104 generates the PWM signals in response to the input voltage V_{IN} and in response to the output voltage V_{OUT}. During the pulse width modulation mode, controller circuit 104 varies the PWM and the PWMDR signals to vary the duty cycles of the switching transistors 111-112 in order to regulate the output voltage V_{OUT} and to maintain the output voltage V_{OUT} at a substantially constant voltage.

For example, controller circuit 104 may include a comparator circuit that compares the output voltage V_{OUT} (or a divided down version of V_{OUT}) to a reference voltage. In response to V_{OUT} decreasing below a target voltage for V_{OUT} that is indicated by the reference voltage, controller circuit 104 adjusts the PWM and PWMDR signals to cause driver circuit 102 to maintain transistor 111 on and transistor 112 off for a longer period of time during each switching period of transistors 111-112. Thus, controller circuit 104 and driver circuit 102 increase the duty cycle of transistor 111 and decrease the duty cycle of transistor 112 in response to V_{OUT} decreasing below the target voltage, causing the current IL in inductor 114 to increase and causing V_{OUT} to increase to the target voltage.

In response to V_{OUT} increasing above the target voltage for V_{OUT}, controller circuit 104 adjusts the PWM and PWMDR signals to cause driver circuit 102 to maintain transistor 112 on and transistor 111 off for a longer period of time during each switching period of transistors 111-112. Thus, controller circuit 104 and driver circuit 102 decrease the duty cycle of transistor 111 and increase the duty cycle of transistor 112 in response to V_{OUT} increasing above the target voltage, causing the current IL in inductor 114 to decrease and causing V_{OUT} to decrease to the target voltage. Controller circuit 104 and driver circuit 102 maintain the duty cycles of transistors 111-112 constant in response to V_{OUT} being at the target voltage. Controller circuit 104 and driver circuit 102 may also vary the duty cycles of switching transistors 111-112 in response to changes in the input voltage V_{IN} during the pulse width modulation mode.

Current sensor circuit 105 senses a current IPT in power train circuit 101. Current sensor circuit 105 generates a current sense signal CS based on the current IPT. Current sensor circuit 105 causes the current sense signal CS to be indicative of the current IPT in power train circuit 101. Current sensor circuit 105 continuously monitors the current IPT in power train circuit 101 during each on-time of switching transistor 111 and during each on-time of switching transistor 112.

Current sensor circuit 105 may be in the same integrated circuit (IC) with transistors 111-112, or current sensor circuit 105 may be in a separate IC. Current sensor circuit 105 can measure a positive current or a negative current in power train circuit 101. A positive current in power train circuit 101 may refer to the inductor current IL flowing from node N1 to V_{OUT}, as shown by the direction of the arrow in Figure 1. A negative current in power train circuit 101 may refer to the inductor current IL flowing in the opposite direction as a positive current.

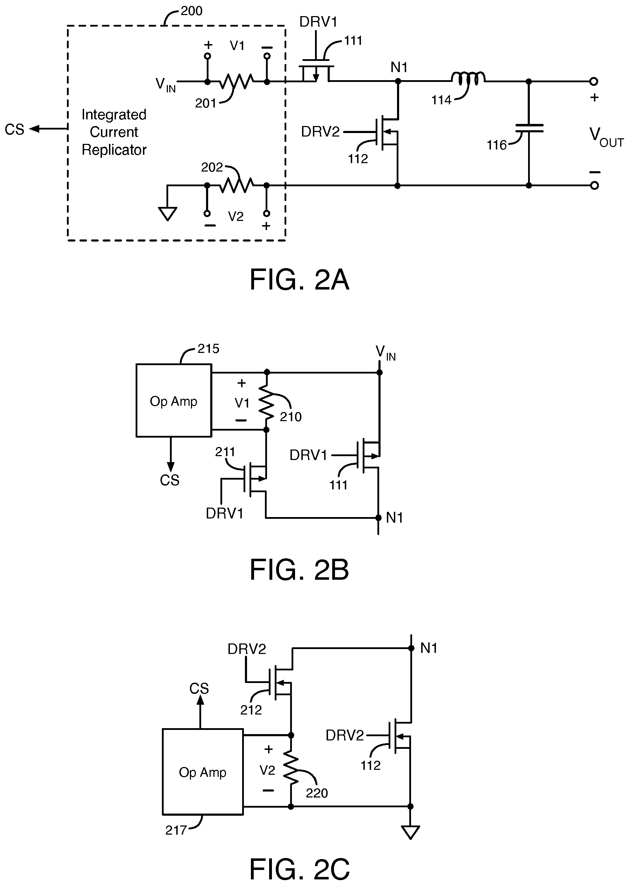

Figures 2A-2C illustrate some examples of current sensor circuit 105, according to various embodiments. Figure 2A illustrates an example of current sensor circuit 105 that includes an integrated current replicator circuit 200, according to an embodiment. The integrated current replicator circuit 200 includes two current sense resistors 201-202 having known resistances, two transconductance amplifiers (not shown), and additional circuitry (not shown). Resistor 201 is coupled between the input voltage V_{IN} and the source of switching transistor 111. When transistor 111 is on, current flows through resistor 201 and transistor 111, generating a first voltage V1 across resistor 201, as shown in FIG. 2A. Voltage V1 and the resistance of resistor 201 indicate the current through resistor 201 and transistor 111 when transistor 111 is on. The first transconductance amplifier generates a first current signal indicative of the voltage V1 across resistor 201.

Resistor 202 is coupled between the source of switching transistor 112 and the ground node. When transistor 112 is on, current flows through transistor 112 and resistor 202, generating a second voltage V2 across resistor 202, as shown in FIG. 2A. Voltage V2 and the resistance of resistor 202 indicate the current through resistor 202 and transistor 112 when transistor 112 is on. The second transconductance amplifier generates a second current signal indicative of the voltage V2 across resistor 202. Integrated current replicator circuit 200 includes an additional amplifier circuit that generates the current sense signal CS based on the first and second current signals generated by the transconductance amplifiers. Further details of an integrated current replicator, such as integrated current replicator circuit 200 are disclosed in commonly-assigned U.S. patent application 20150280558, filed March 27, 2014, which is incorporated by reference herein in its entirety.

Integrated current replicator circuit 200 can measure a positive current or a negative current through either of resistors 201 or 202. Integrated current replicator circuit 200 can measure a positive current flowing through resistor 201 from V_{IN} to transistor 111 or a negative current flowing through resistor 201 from transistor 111 to V_{IN}. Integrated current replicator circuit 200 can also measure a positive current flowing through resistor 202 from the ground node to transistor 112 or a negative current flowing through resistor 202 from transistor 112 to the ground node.

Figures 2B-2C illustrate another example of current sensor circuit 105 that includes two resistors, two transistors, and operational amplifiers, according to another embodiment. Figure 2B illustrates a sense resistor 210, a P-channel FET 211, and an operational amplifier (op amp) circuit 215. Resistor 210 and transistor 211 are coupled in parallel with switching transistor 111. The gate of transistor 211 is coupled to receive the same drive signal DRV1 from driver circuit 102 that is provided to the gate of transistor 111. Thus, driver circuit 102 turns transistors 111 and 211 on concurrently during each switching period. When transistors 111 and 211 are on, a current flows through sense resistor 210 and transistor 211 that is a fraction of the current flowing through the main switching transistor 111. The voltage V1 across resistor 210 is proportional to the current through resistor 210. Voltage V1 is provided to inputs of operational amplifier circuit 215. The op amp circuit 215 causes the current sense signal CS to indicate the current through transistor 111 while transistor 111 is on.

Figure 2C illustrates a sense resistor 220, an N-channel FET 212, and an operational amplifier (op amp) circuit 217. Resistor 220 and transistor 212 are coupled in parallel with switching transistor 112. The gate of transistor 212 is coupled to receive the same drive signal DRV2 from driver circuit 102 that is provided to the gate of transistor 112. Thus, driver circuit 102 turns transistors 112 and 212 on concurrently during each switching period. When transistors 112 and 212 are on, a current flows through sense resistor 220 and transistor 212 that is a fraction of the current flowing through switching transistor 112. The voltage V2 across resistor 220 is proportional to the current through resistor 220. Voltage V2 is provided to inputs of operational amplifier circuit 217. Op amp circuit 217 causes the current sense signal CS to indicate the current through transistor 112 while transistor 112 is on.

The current sensor circuit of Figures 2B-2C can measure a positive current or a negative current through either one of resistors 210 or 220. Op amp 215 can measure a positive current flowing through resistor 210 from V_{IN} to node N1 or a negative current flowing through resistor 210 from node N1 to V_{IN}. Op amp 217 can measure a positive current flowing through resistor 220 from the ground node to node N1 or a negative current flowing through resistor 220 from node N1 to the ground node.

According to another embodiment, current sensor circuit 105 includes two current transformers. One of the current transformers is coupled in series with switching transistor 111, and the other current transformer is coupled in series with switching transistor 112. The outputs of the two current transformers are summed in order to obtain the DC current in power train circuit 101. The current transformers can measure a positive current or a negative current in power train circuit 101.

According to yet another embodiment, current sensor circuit 105 includes circuitry that uses direct-current resistance (DCR) current sensing. In this embodiment, current sensor circuit 105 includes a series resistor-capacitor (RC) network that is coupled in parallel with inductor 114. The RC network uses DCR current sensing to measure the current through inductor 114 by measuring the resistance of inductor 114. The resistor and the capacitor in the RC network of current sensor circuit 105 are selected to cause the RC time constant of the RC network to be equal to an L/R_{L} time constant of inductor 114, where L is the inductance of inductor 114, and R_{L} is the DC resistance of inductor 114. This embodiment can also be used to measure a positive current or a negative current in power train circuit 101.

Referring again to Figure 1, power converter circuit 100 has a feedback loop circuit that includes current sensor circuit 105, hysteretic comparison circuit 106, and driver circuit 102. The current sensor circuit 105 and the hysteretic comparison circuit 106 are a current limit circuit that prevents the current in power train circuit 101 from exceeding a positive current limit. The current limit circuit also prevents a negative current in power train circuit 101 from exceeding a negative current limit. Further details of the current limit circuit are now described.

As shown in Figure 1, the current sense signal CS generated by current sensor circuit 105 is provided to an input of hysteretic comparison circuit 106. Hysteretic comparison circuit 106 generates control signal CNTL and hysteretic drive signals HYSDR based on the current sense signal CS. The hysteretic drive signals HYSDR are provided to driver circuit 102.

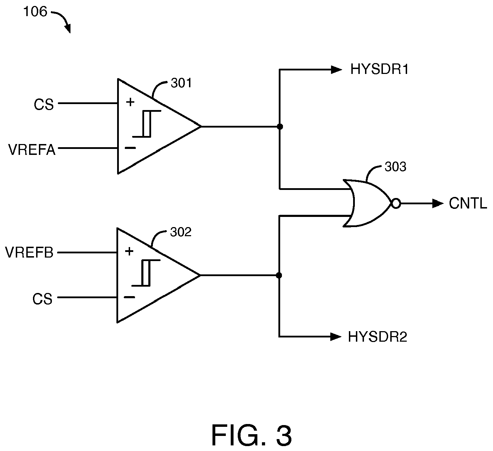

Figure 3 illustrates an example of hysteretic comparison circuit 106, according to an embodiment. In the exemplary embodiment of Figure 3, hysteretic comparison circuit 106 includes a first hysteretic comparator circuit 301, a second hysteretic comparator circuit 302, and a NOR gate circuit 303. Also, in the embodiment of Figure 3, the current sense signal CS is a voltage signal. The current sense signal CS is provided to the non-inverting input of hysteretic comparator circuit 301. A first reference voltage VREFA is provided to the inverting input of hysteretic comparator circuit 301. Hysteretic comparator circuit 301 generates a first hysteretic drive signal HYSDR1 at its output that is based on the difference between the voltage of signal CS and reference voltage VREFA. The current sense signal CS is also provided to the inverting input of hysteretic comparator circuit 302. A second reference voltage VREFB is provided to the non-inverting input of hysteretic comparator circuit 302. Hysteretic comparator circuit 302 generates a second hysteretic drive signal HYSDR2 at its output that is based on the difference between reference voltage VREFB and the voltage of signal CS. Hysteretic drive signals HYSDR1 and HYSDR2 are collectively referred to as hysteretic drive signals HYSDR in Figure 1.

A hysteretic comparator, such as hysteretic comparator circuits 301 and 302, has two thresholds. A hysteretic comparator determines which of its two thresholds to apply to the input voltage of the hysteretic comparator based on the current state (high or low) of the output voltage of the hysteretic comparator. Each of the hysteretic comparator circuits 301-302 may include, for example, a comparator or amplifier circuit coupled to a positive feedback loop circuit. The positive feedback loop circuit causes the hysteretic comparator to be responsive to the state of its output voltage in order to determine which of its two thresholds to compare to its input voltage.

Hysteretic comparator circuit 301 has a first threshold VTPU and a second threshold VTPL. The first threshold VTPU and the second threshold VTPL represent two different voltage thresholds. The difference between VTPU and VTPL equals the hysteresis of comparator circuit 301. The first threshold VTPU is indicative of a positive current limit ITPU for the current through power train circuit 101. In response to the current through power train circuit 101 reaching the positive current limit ITPU, power converter circuit 100 enters the positive current limit mode. The second threshold VTPL is indicative of a positive minimum current ITPL of the positive current limit mode. In response to the current through power train circuit 101 reaching the positive minimum current ITPL, power converter circuit 100 exits the positive current limit mode and returns to pulse width modulation mode. The first threshold VTPU and the second threshold VTPL of hysteretic comparator circuit 301 are determined by the reference voltage VREFA and other characteristics of comparator circuit 301. The reference voltage VREFA may be programmably adjustable by a user or by other circuitry to vary the thresholds of hysteretic comparator circuit 301.

Further details of how power converter circuit 100 enters and exits the positive current limit mode are now described. During the normal operation of hysteretic comparison circuit 106, hysteretic comparator circuit 301 monitors the current sense signal CS to determine when a positive current through power train circuit 101 increases to equal or exceed the positive current limit ITPU. The current sense signal CS rising to the first threshold VTPU of hysteretic comparator circuit 301 indicates that the current through power train circuit 101 has increased to the positive current limit ITPU. In response to the current sense signal CS increasing to the first threshold VTPU of hysteretic comparator circuit 301, hysteretic comparator circuit 301 asserts the drive signal HYSDR1 to a logic high state, causing NOR gate circuit 303 to de-assert the CNTL signal to a logic low state, and causing power converter 100 to enter the positive current limit mode. In response to signal CNTL being in a logic low state, gate circuit 103 prevents the values of the PWM signals from propagating to the PWMDR signals. Thus, hysteretic comparison circuit 106 prevents the PWM signals from controlling the conductive states of switching transistors 111-112 during the positive current limit mode.

In response to receiving a logic high state in the drive signal HYSDR1, driver circuit 102 turns transistor 111 off if transistor 111 is on and turns transistor 112 on if transistor 112 is off. Driver circuit 102 maintains the main switching transistor 111 off and maintains the auxiliary switching transistor 112 on during the positive current limit mode in response to the logic high state in drive signal HYSDR1. As a result of transistor 111 being off and transistor 112 being on, the current IL through the inductor 114 decreases. By causing the inductor current IL to decrease in the positive current limit mode, the current limit circuit prevents the current through power train circuit 101 from substantially exceeding the positive current limit ITPU. Although in some embodiments, delay in the current limit circuit may allow the current through power train circuit 101 to briefly exceed the positive current limit ITPU.

During the positive current limit mode of power converter 100, hysteretic comparator circuit 301 monitors the current sense signal CS to determine when the current through power train circuit 101 has decreased to be equal to or less than the positive minimum current ITPL of the positive current limit mode. The current sense signal CS falling to the second threshold VTPL of hysteretic comparator circuit 301 indicates that the current through power train circuit 101 has decreased to the positive minimum current ITPL of the positive current limit mode. In response to the current sense signal CS decreasing to the second threshold VTPL of hysteretic comparator circuit 301, hysteretic comparator circuit 301 de-asserts the drive signal HYSDR1 to a logic low state, causing NOR gate circuit 303 to assert the CNTL signal to a logic high state, and causing power converter 100 to re-enter the pulse width modulation mode. When power converter circuit 100 is in the positive current limit mode, the output signal HYSDR2 of hysteretic comparator circuit 302 is in a logic low state, and therefore, the output signal CNTL of NOR gate circuit 303 is controlled by comparator circuit 301.

In response to the CNTL signal being in a logic high state, gate circuit 103 passes the values of the PWM signals to signals PWMDR. In response to driver circuit 102 receiving a logic low state in drive signal HYSDR1, driver circuit 102 controls the conductive states of transistors 111 and 112 based on the PWMDR signals, which equal the values of the corresponding PWM signals. Controller circuit 104 then controls the conductive states of transistors 111-112 again using the PWM signals in pulse width modulation mode. Controller circuit 104 and driver circuit 102 control the current IL through inductor 114 in response to the current drawn by the load as indicated by the output voltage V_{OUT} during pulse width modulation mode as described above.

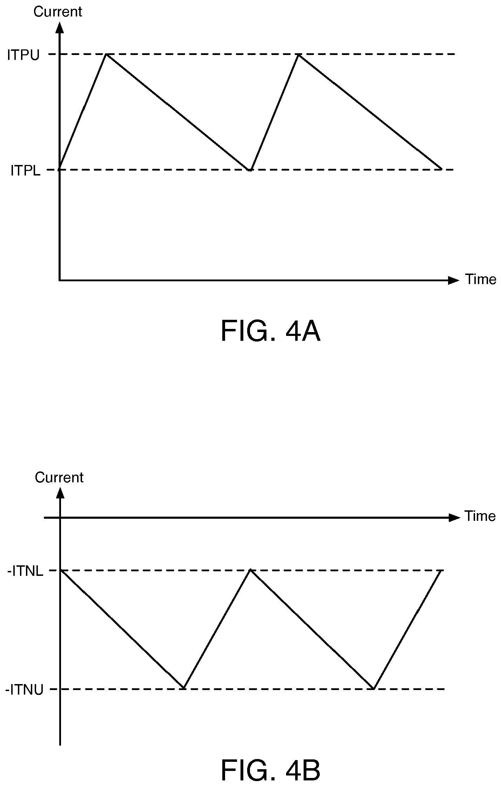

Figure 4A is a timing diagram that illustrates an example of the current through power train circuit 101 as power converter circuit 100 enters and exits the positive current limit mode, according to an embodiment. In the example of Figure 4A, the current through the power train circuit 101 (shown on the y axis) increases until the current reaches the positive current limit ITPU. In response to the current through the power train 101 reaching ITPU, power converter circuit 100 enters the positive current limit mode, and the current through the power train 101 decreases as described above. The current through power train 101 then decreases to the positive minimum current ITPL. In response to the current through power train 101 reaching ITPL, power converter circuit 100 enters the pulse width modulation mode again. The current through power train 101 may increase or decrease in pulse width modulation mode depending on the current drawn by the load. In the example of FIG. 4A, the current drawn by the load is greater than the positive current limit ITPU. Therefore, power converter circuit 100 increases the current through power train 101 during each pulse width modulation mode until the positive current limit ITPU is reached.

Referring again to Figure 3, hysteretic comparator circuit 302 has a first threshold VTNU and a second threshold VTNL. The first threshold VTNU and the second threshold VTNL represent two different voltage thresholds. The difference between VTNU and VTNL equals the hysteresis of comparator circuit 302. The first threshold VTNU is indicative of a negative current limit -ITNU (i.e., a maximum negative current) for the current through power train circuit 101. In response to the current through power train circuit 101 reaching the negative current limit -ITNU, power converter circuit 100 enters the negative current limit mode. The second threshold VTNL is indicative of a minimum negative current -ITNL of the negative current limit mode. In response to the current through power train circuit 101 reaching the minimum negative current -ITNL, power converter circuit 100 exits the negative current limit mode and returns to pulse width modulation mode.

The first threshold VTNU and the second threshold VTNL of hysteretic comparator circuit 302 are determined by the reference voltage VREFB and other characteristics of comparator circuit 302. The reference voltage VREFB may be programmably adjustable by a user or by other circuitry to vary the thresholds of hysteretic comparator circuit 302. Because two different programmable reference voltages VREFA and VREFB are used to determine the thresholds of comparator circuits 301 and 302, respectively, the negative current limit -ITNU can be programmed to be a different current value than the absloute value of the positive current limit ITPU. Alternatively, the negative current limit -ITNU can be programmed to be the absloute value of the positive current limit ITPU.

Further details of how power converter circuit 100 enters and exits the negative current limit mode are now described. During the normal operation of hysteretic comparison circuit 106, hysteretic comparator circuit 302 monitors the current sense signal CS to determine when a negative current through power train circuit 101 reaches or exceeds the negative current limit -ITNU. The current through power train circuit 101 is a negative current when the inductor current IL flows in the opposite direction of the arrow shown for IL in Figure 1 from inductor 114 through transistor 111 to V_{IN} or through transistor 112 to ground. Negative current may flow through power train 101, for example, if the load suddenly transitions from drawing a heavy load current to drawing a light load current from power converter 100. An increasing negative current refers to the power train current falling farther below zero (i.e., a current flowing in inductor 114 toward node N1 increasing). A decreasing negative current refers to the power train current rising closer to zero (i.e., a current flowing in inductor 114 toward node N1 decreasing).

The current sense signal CS decreasing to the first threshold VTNU of hysteretic comparator circuit 302 indicates that a negative current through power train circuit 101 has reached the negative current limit -ITNU. In response to the current sense signal CS decreasing to the first threshold VTNU of hysteretic comparator circuit 302, hysteretic comparator circuit 302 asserts its output drive signal HYSDR2 to a logic high state, causing NOR gate circuit 303 to de-assert the CNTL signal to a logic low state, and causing power converter 100 to enter the negative current limit mode. In response to signal CNTL being in a logic low state, gate circuit 103 prevents the values of the PWM signals from propagating to the PWMDR signals. Thus, hysteretic comparison circuit 106 prevents the PWM signals from controlling the conductive states of switching transistors 111-112 during the negative current limit mode.

In response to receiving a logic high state in drive signal HYSDR2, driver circuit 102 turns transistor 111 on if transistor 111 is off and turns transistor 112 off if transistor 112 is on. Driver circuit 102 maintains the main switching transistor 111 on and maintains the auxiliary switching transistor 112 off during the negative current limit mode in response to the logic high state in drive signal HYSDR2. As a result of transistor 111 being on and transistor 112 being off, the negative current through inductor 114 decreases. By causing the negative current through inductor 114 to decrease in the negative current limit mode, the current limit circuit prevents the negative current through power train 101 from substantially exceeding the negative current limit -ITNU. Although delay in the current limit circuit may allow the negative current through power train circuit 101 to briefly exceed the negative current limit -ITNU.

During the negative current limit mode of power converter 100, hysteretic comparator circuit 302 monitors the current sense signal CS to determine when the negative current through power train circuit 101 has decreased to be equal to or less than the minimum negative current -ITNL of the negative current limit mode. The current sense signal CS increasing to the second threshold VTNL of hysteretic comparator circuit 302 indicates that the negative current through power train circuit 101 has decreased to the minimum negative current -ITNL of the negative current limit mode. In response to the current sense signal CS increasing to the second threshold VTNL of hysteretic comparator circuit 302, hysteretic comparator circuit 302 de-asserts its output drive signal HYSDR2 to a logic low state, causing NOR gate circuit 303 to assert the CNTL signal to a logic high state, and causing power converter 100 to re-enter the pulse width modulation mode. When power converter 100 is in the negative current limit mode, the output signal HYSDR1 of hysteretic comparator circuit 301 is in a logic low state, and therefore, the output signal CNTL of NOR gate circuit 303 is controlled by comparator circuit 302.

In response to the CNTL signal being in a logic high state, gate circuit 103 passes the values of the PWM signals to signals PWMDR. In response to driver circuit 102 receiving a logic low state in drive signal HYSDR2, driver circuit 102 controls the conductive states of transistors 111 and 112 based on the PWMDR signals. Controller circuit 104 then controls the conductive states of transistors 111-112 again using the PWM signals during pulse width modulation mode. Controller circuit 104 and driver circuit 102 control the current through power train 101 in response to the current drawn by the load as indicated by the output voltage V_{OUT} during pulse width modulation mode as described above.

Figure 4B is a timing diagram that illustrates an example of the current through power train circuit 101 as power converter circuit 100 enters and exits the negative current limit mode, according to an embodiment. In the example of Figure 4B, the negative current through power train circuit 101 (shown on the y axis) increases until the negative current reaches the negative current limit -ITNU. In response to the negative current through the power train 101 reaching -ITNU, power converter circuit 100 enters the negative current limit mode, and the negative current through the power train 101 decreases as described above. The negative current through power train 101 then decreases to the minimum negative current -ITNL of the negative current limit mode. In response to the negative current through power train 101 reaching -ITNL, power converter circuit 100 enters the pulse width modulation mode again. The current through the power train circuit 101 varies in pulse width modulation mode depending on the current drawn by the load. In the example of Figure 4B, the negative current through power train circuit 101 increases during each pulse width modulation mode until the negative current limit -ITNU is reached. As specific examples that are not intended to be limiting, -ITNL and -ITNU may be -40 amps and -60 amps, respectively.

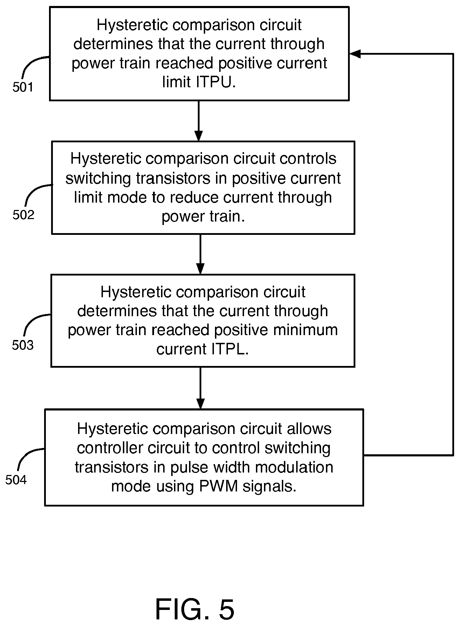

Figure 5 is a flow chart showing operations that may be performed to determine when power converter circuit 100 enters and exits the positive current limit mode, according to an embodiment. As disclosed above, power converter circuit 100 continuously monitors the current through power train circuit 101 using current sensor circuit 105 and hysteretic comparison circuit 106. In operation 501, hysteretic comparison circuit 106 determines that the current through power train circuit 101 has reached the positive current limit ITPU, for example, as described with respect to Figure 3. In operation 502, hysteretic comparison circuit 106 controls the conductive states of switching transistors 111-112 in the positive current limit mode to reduce the current through power train circuit 101, as described above. In operation 503, hysteretic comparison circuit 106 determines that the current through power train circuit 101 has reached the positive minimum current ITPL, as described above. In operation 504, hysteretic comparison circuit 106 allows controller circuit 104 to control the conductive states of switching transistors 111-112 in pulse width modulation mode using the PWM signals, as described above. In operation 504, power converter circuit 100 exits the positive current limit mode. Power converter circuit 100 may subsequently return to operation 501 if the current in power train 101 reaches ITPU again.

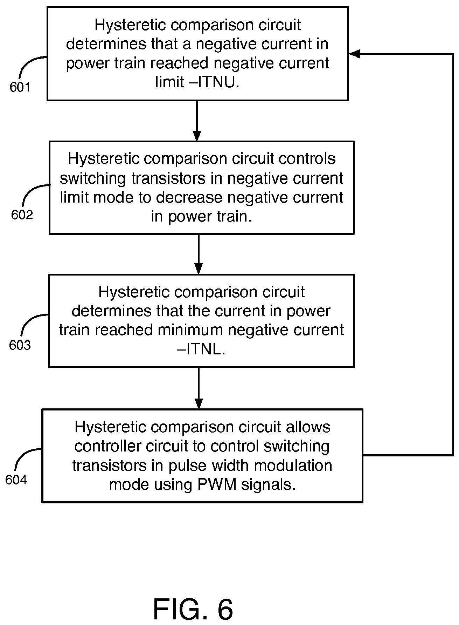

Figure 6 is a flow chart showing operations that may be performed to determine when power converter circuit 100 enters and exits the negative current limit mode, according to an embodiment. In operation 601, hysteretic comparison circuit 106 determines that a negative current in power train circuit 101 has reached the negative current limit -ITNU, for example, as described with respect to Figure 3. In operation 602, hysteretic comparison circuit 106 controls the conductive states of switching transistors 111-112 in the negative current limit mode to decrease the negative current in power train circuit 101, as described above. In operation 603, hysteretic comparison circuit 106 determines that the current in power train circuit 101 has reached the minimum negative current -ITNL, as described above. In operation 604, hysteretic comparison circuit 106 allows controller circuit 104 to control the conductive states of switching transistors 111-112 in pulse width modulation mode using the PWM signals, as described above. In operation 604, power converter circuit 100 exits the negative current limit mode. Power converter circuit 100 may subsequently return to operation 601 if the current in power train 101 reaches -ITNU again.

According to another embodiment, two power converter circuits 100 are coupled in parallel to provide output current to a single load at an output node. In this embodiment, a first one of the power converter circuits is set to regulate the voltage at the output node to a first output voltage, and the second power converter circuit regulates the voltage at the output node to a second output voltage that is greater than the first output voltage. The first and second power converter circuits operate independently of each other. The first and second power converter circuits independently transition into and out of the PWM, positive current limit, and negative current limit modes.

According to yet another embodiment, a power converter circuit includes two power train circuits 101, two driver circuits 102, and a single one of each of the circuits 103-106 shown in Figure 1. Each driver circuit 102 controls the current in one of the two power train circuits 101. In this embodiment, driver circuits 102 control power train circuits 101 in PWM mode based on the PWM signals generated by the single controller circuit 104. Driver circuits 102 control the currents in power train circuits 101 in the positive and negative current limit modes in response to the output drive signals HYSDR of the single hysteretic comparison circuit 106, as described above.

According to still another embodiment, the techniques disclosed herein with respect to measuring and limiting a positive current in a power train circuit can be employed in a power train circuit in which switching transistor 112 is replaced with a diode. Current in the diode only flows in the positive direction from ground to inductor 114. Current sensor circuit 105 and hysteretic comparison circuit 106 limit the outgoing positive current through the power train circuit to the load as disclosed herein.

The methods and apparatuses disclosed herein may be incorporated into any suitable electronic device or system of electronic devices. The methods and apparatuses may be used to power numerous types of integrated circuits, such as programmable array logic (PAL), programmable logic arrays (PLAs), field programmable logic arrays (FPLAs), electrically programmable logic devices (EPLDs), electrically erasable programmable logic devices (EEPLDs), logic cell arrays (LCAs), field programmable gate arrays (FPGAs), application specific standard products (ASSPs), application specific integrated circuits (ASICs), digital signal processors (DSPs), microprocessors, and graphics processing units (GPUs).

The power converter circuits disclosed herein may be part of a data processing system that includes one or more of the following components; a processor; memory; input/output circuitry; and peripheral devices. The power converter circuits can be used in a wide variety of applications, such as computer networking, data networking, instrumentation, video processing, digital signal processing, or any other application.

Although the method operations were described in a specific order, it should be understood that other operations may be performed in between described operations, described operations may be adjusted so that they occur at different times or in a different order, or described operations may be distributed in a system that allows the occurrence of the processing operations at various intervals associated with the processing.

The following examples pertain to further embodiments. Embodiment 1 is a power converter circuit comprising: a current sensor circuit that generates an indication of a current through a power train circuit, wherein the power converter circuit controls the current through the power train circuit; and a hysteretic comparison circuit that compares the indication of the current through the power train circuit to a negative current limit, wherein the power converter circuit causes a negative current in the power train circuit that is flowing away from an output node of the power train circuit to decrease in response to an indication generated by the hysteretic comparison circuit that the negative current in the power train circuit has reached the negative current limit.

Embodiment 2 is the power converter circuit of embodiment 1 further comprising: a controller circuit that generates a pulse width modulation signal in response to a signal from the power train circuit, wherein the power converter circuit controls the current through the power train circuit in response to the pulse width modulation signal during a pulse width modulation mode; and a gate circuit that prevents the power converter circuit from controlling the current through the power train circuit using the pulse width modulation signal in response to the indication generated by the hysteretic comparison circuit that the negative current in the power train circuit has reached the negative current limit.

Embodiment 3 is the power converter circuit of embodiment 1, wherein the current sensor circuit continuously monitors the current through the power train circuit to generate the indication of the current through the power train circuit during an on time of a first switching transistor in the power train circuit and during an on time of a second switching transistor in the power train circuit.

Embodiment 4 is the power converter circuit of embodiment 1, wherein the hysteretic comparison circuit comprises: a first hysteretic comparator circuit that generates a first drive signal by comparing first and second thresholds to a current sense signal, wherein the current sensor circuit generates the current sense signal as the indication of the current through the power train circuit, and wherein the power converter circuit controls the current through the power train circuit in response to the first drive signal during a negative current limit mode.

Embodiment 5 is the power converter circuit of embodiment 4, wherein the first threshold is indicative of the negative current limit of the negative current in the power train circuit, wherein the second threshold is indicative of a minimum negative current of the negative current limit mode, wherein the power converter circuit enters the negative current limit mode in response to the negative current in the power train circuit reaching the negative current limit, wherein the power converter circuit causes a switching transistor in the power train circuit to couple an inductor to an input node at an input voltage during the negative current limit mode, and wherein the power converter circuit exits the negative current limit mode in response to the negative current in the power train circuit reaching the minimum negative current of the negative current limit mode.

Embodiment 6 is the power converter circuit of embodiment 4, wherein the hysteretic comparison circuit further comprises: a second hysteretic comparator circuit that generates a second drive signal by comparing third and fourth thresholds to the current sense signal, wherein the power converter circuit controls the current through the power train circuit in response to the second drive signal during a positive current limit mode.

Embodiment 7 is the power converter circuit of embodiment 6, wherein the third threshold is indicative of a positive current limit of the current through the power train circuit, wherein the fourth threshold is indicative of a minimum current of the positive current limit mode, wherein the power converter circuit enters the positive current limit mode in response to the current through the power train circuit reaching the positive current limit, wherein the power converter circuit causes a switching transistor in the power train circuit to couple an inductor in the power train circuit to a ground node during the positive current limit mode, and wherein the power converter circuit exits the positive current limit mode in response to the current through the power train circuit reaching the minimum current of the positive current limit mode.

Embodiment 8 is the power converter circuit of embodiment 7, further comprising: a controller circuit that generates a pulse width modulation signal in response to a signal from the power train circuit to control the current through the power train circuit and to regulate an output voltage at the output node during a pulse width modulation mode, wherein the hysteretic comparison circuit further comprises a first logic gate circuit that performs a logic function on the first and second drive signals to generate a control signal, wherein the first logic gate circuit de-asserts the control signal to indicate that the current through the power train circuit has reached the negative current limit or the positive current limit; and a second logic gate circuit that prevents the power converter circuit from controlling the current through the power train circuit using the pulse width modulation signal in response to the control signal being de-asserted.

Embodiment 9 is the power converter circuit of embodiment 1, wherein the power train circuit comprises first and second switching transistors, wherein the power converter circuit controls current through an inductor by controlling conductive states of the first and second switching transistors, wherein the first switching transistor is coupled between an input node at an input voltage and the inductor, and wherein the second switching transistor is coupled between the inductor and a ground node.

Embodiment 10 is a power converter circuit comprising: a power train circuit comprising a first switching transistor, wherein the power converter circuit turns the first switching transistor on and off in response to a pulse width modulation signal in a pulse width modulation mode to control a current in the power train circuit; a hysteretic comparison circuit that causes the power converter circuit to control the current in the power train circuit in a first current limit mode in response to the current in the power train circuit reaching a first current limit; and a gate circuit that prevents the power converter circuit from controlling the current in the power train circuit using the pulse width modulation signal during the first current limit mode in response to the hysteretic comparison circuit indicating that the current in the power train circuit has reached the first current limit.

Embodiment 11 is the power converter circuit of embodiment 10, wherein the hysteretic comparison circuit causes the power converter circuit to control the current in the power train circuit in a second current limit mode in response to the current in the power train circuit reaching a positive current limit, wherein the first current limit is a negative current limit, and wherein the gate circuit prevents the power converter circuit from controlling the current in the power train circuit using the pulse width modulation signal during the second current limit mode in response to the hysteretic comparison circuit indicating that the current in the power train circuit has reached the positive current limit.

Embodiment 12 is the power converter circuit of embodiment 10 further comprising: a current sensor circuit that monitors the current in the power train circuit to generate a signal indicative of the current in the power train circuit during an on time of the first switching transistor and during an on time of a second switching transistor in the power train circuit, wherein the signal indicative of the current in the power train circuit is provided to the hysteretic comparison circuit.

Embodiment 13 is the power converter circuit of embodiment 12, wherein the first current limit is a negative current limit, wherein the hysteretic comparison circuit compares the signal indicative of the current in the power train circuit to a first threshold indicative of the negative current limit, wherein the power converter circuit causes a negative current in the power train circuit that is flowing away from an output node of the power train circuit to decrease in the first current limit mode in response to the hysteretic comparison circuit indicating that the negative current in the power train circuit has reached the negative current limit.

Embodiment 14 is the power converter circuit of embodiment 13, wherein the hysteretic comparison circuit compares the signal indicative of the current in the power train circuit to a second threshold that is indicative of a minimum negative current of the first current limit mode, and wherein the power converter circuit exits the first current limit mode and returns to the pulse width modulation mode in response to the negative current in the power train circuit reaching the minimum negative current of the first current limit mode.

Embodiment 15 is the power converter circuit of embodiment 13, wherein the hysteretic comparison circuit compares the signal indicative of the current in the power train circuit to a second threshold that is indicative of a second current limit, wherein the power converter circuit causes the current in the power train circuit to decrease in a second current limit mode in response to the hysteretic comparison circuit indicating that a positive current in the power train circuit that is flowing toward the output node of the power train circuit has reached the second current limit.

Embodiment 16 is the power converter circuit of embodiment 15, wherein the hysteretic comparison circuit compares the signal indicative of the current in the power train circuit to a third threshold indicative of a positive minimum current of the second current limit mode, and wherein the power converter circuit exits the second current limit mode and returns to the pulse width modulation mode in response to the positive current in the power train circuit reaching the positive minimum current of the second current limit mode.

Embodiment 17 is a method comprising: generating an indication that a positive current in a power train circuit has reached a positive current limit using a hysteretic comparison circuit; decreasing the positive current in the power train circuit in a positive current limit mode using a driver circuit in response to the indication that the positive current in the power train circuit has reached the positive current limit; generating an indication that a negative current in the power train circuit has reached a negative current limit using the hysteretic comparison circuit; and decreasing the negative current in the power train circuit in a negative current limit mode using the driver circuit in response to the indication that the negative current in the power train circuit has reached the negative current limit, wherein the driver circuit and the hysteretic comparison circuit are part of a power converter circuit.

Embodiment 18 is the method of embodiment 17 further comprising: generating a signal indicative of the positive current and the negative current in the power train circuit using a current sensor circuit during an on time of a first switching transistor in the power train circuit and during an on time of a second switching transistor in the power train circuit, wherein the hysteretic comparison circuit generates the indication that the positive current in the power train circuit has reached the positive current limit and the indication that the negative current in the power train circuit has reached the negative current limit in response to the signal indicative of the positive current and the negative current in the power train circuit.

Embodiment 19 is the method of embodiment 17 further comprising: exiting the positive current limit mode in response to the positive current in the power train circuit reaching a positive minimum current of the positive current limit mode; and exiting the negative current limit mode in response to the negative current in the power train circuit reaching a minimum negative current of the negative current limit mode.

Embodiment 20 is the method of embodiment 17 further comprising: generating a pulse width modulation signal using a controller circuit in response to a signal from the power train circuit to control a current in the power train circuit in a pulse width modulation mode; and preventing the controller circuit from controlling the current in the power train circuit in the pulse width modulation mode in response to the indication that the positive current in the power train circuit has reached the positive current limit or in response to the indication that the negative current in the power train circuit has reached the negative current limit.

The foregoing description of the exemplary embodiments of the present invention is not intended to be exhaustive or to limit the present invention to the examples disclosed herein. In some instances, features of the present invention can be employed without a corresponding use of other features as set forth. Many modifications, substitutions, and variations are possible in light of the above teachings, without departing from the scope of the present invention.

## Claims

1. A power converter circuit comprising:
a current sensor circuit that generates an indication of a current through a power train circuit, wherein the power converter circuit controls the current through the power train circuit; and
a hysteretic comparison circuit that compares the indication of the current through the power train circuit to a negative current limit,
wherein the power converter circuit causes a negative current in the power train circuit that is flowing away from an output node of the power train circuit to decrease in response to an indication generated by the hysteretic comparison circuit that the negative current in the power train circuit has reached the negative current limit.

2. The power converter circuit of claim 1 further comprising:
a controller circuit that generates a pulse width modulation signal in response to a signal from the power train circuit, wherein the power converter circuit controls the current through the power train circuit in response to the pulse width modulation signal during a pulse width modulation mode; and
a gate circuit that prevents the power converter circuit from controlling the current through the power train circuit using the pulse width modulation signal in response to the indication generated by the hysteretic comparison circuit that the negative current in the power train circuit has reached the negative current limit.

3. The power converter circuit of claim 1, wherein the current sensor circuit continuously monitors the current through the power train circuit to generate the indication of the current through the power train circuit during an on time of a first switching transistor in the power train circuit and during an on time of a second switching transistor in the power train circuit.

4. The power converter circuit of claim 1, wherein the hysteretic comparison circuit comprises:
a first hysteretic comparator circuit that generates a first drive signal by comparing first and second thresholds to a current sense signal, wherein the current sensor circuit generates the current sense signal as the indication of the current through the power train circuit, and wherein the power converter circuit controls the current through the power train circuit in response to the first drive signal during a negative current limit mode.

5. The power converter circuit of claim 4, wherein the first threshold is indicative of the negative current limit of the negative current in the power train circuit, wherein the second threshold is indicative of a minimum negative current of the negative current limit mode, wherein the power converter circuit enters the negative current limit mode in response to the negative current in the power train circuit reaching the negative current limit, wherein the power converter circuit causes a switching transistor in the power train circuit to couple an inductor to an input node at an input voltage during the negative current limit mode, and wherein the power converter circuit exits the negative current limit mode in response to the negative current in the power train circuit reaching the minimum negative current of the negative current limit mode.

6. The power converter circuit of claim 4, wherein the hysteretic comparison circuit further comprises:
a second hysteretic comparator circuit that generates a second drive signal by comparing third and fourth thresholds to the current sense signal, wherein the power converter circuit controls the current through the power train circuit in response to the second drive signal during a positive current limit mode.

7. The power converter circuit of claim 6, wherein the third threshold is indicative of a positive current limit of the current through the power train circuit, wherein the fourth threshold is indicative of a minimum current of the positive current limit mode, wherein the power converter circuit enters the positive current limit mode in response to the current through the power train circuit reaching the positive current limit, wherein the power converter circuit causes a switching transistor in the power train circuit to couple an inductor in the power train circuit to a ground node during the positive current limit mode, and wherein the power converter circuit exits the positive current limit mode in response to the current through the power train circuit reaching the minimum current of the positive current limit mode.

8. The power converter circuit of claim 7, further comprising:
a controller circuit that generates a pulse width modulation signal in response to a signal from the power train circuit to control the current through the power train circuit and to regulate an output voltage at the output node during a pulse width modulation mode,
wherein the hysteretic comparison circuit further comprises a first logic gate circuit that performs a logic function on the first and second drive signals to generate a control signal, wherein the first logic gate circuit de-asserts the control signal to indicate that the current through the power train circuit has reached the negative current limit or the positive current limit; and
a second logic gate circuit that prevents the power converter circuit from controlling the current through the power train circuit using the pulse width modulation signal in response to the control signal being de-asserted.

9. The power converter circuit of claim 1, wherein the power train circuit comprises first and second switching transistors, wherein the power converter circuit controls current through an inductor by controlling conductive states of the first and second switching transistors, wherein the first switching transistor is coupled between an input node at an input voltage and the inductor, and wherein the second switching transistor is coupled between the inductor and a ground node.

10. A method comprising:
generating an indication that a positive current in a power train circuit has reached a positive current limit using a hysteretic comparison circuit;
decreasing the positive current in the power train circuit in a positive current limit mode using a driver circuit in response to the indication that the positive current in the power train circuit has reached the positive current limit;
generating an indication that a negative current in the power train circuit has reached a negative current limit using the hysteretic comparison circuit; and
decreasing the negative current in the power train circuit in a negative current limit mode using the driver circuit in response to the indication that the negative current in the power train circuit has reached the negative current limit, wherein the driver circuit and the hysteretic comparison circuit are part of a power converter circuit.

11. The method of claim 10 further comprising:
generating a signal indicative of the positive current and the negative current in the power train circuit using a current sensor circuit during an on time of a first switching transistor in the power train circuit and during an on time of a second switching transistor in the power train circuit,
wherein the hysteretic comparison circuit generates the indication that the positive current in the power train circuit has reached the positive current limit and the indication that the negative current in the power train circuit has reached the negative current limit in response to the signal indicative of the positive current and the negative current in the power train circuit.

12. The method of claim 10 further comprising:
exiting the positive current limit mode in response to the positive current in the power train circuit reaching a positive minimum current of the positive current limit mode; and
exiting the negative current limit mode in response to the negative current in the power train circuit reaching a minimum negative current of the negative current limit mode.

13. The method of claim 10 further comprising:
generating a pulse width modulation signal using a controller circuit in response to a signal from the power train circuit to control a current in the power train circuit in a pulse width modulation mode; and
preventing the controller circuit from controlling the current in the power train circuit in the pulse width modulation mode in response to the indication that the positive current in the power train circuit has reached the positive current limit or in response to the indication that the negative current in the power train circuit has reached the negative current limit.
